# EUROPEAN PATENT SPECIFICATION

(11) **EP 4 432 105 B1**
(45) Date of publication and mention of the grant of the patent: **24.12.2025**
(21) Application number: 24163275.1
(22) Date of filing: 13.03.2024
(51) Int. Cl.: G06F 12/1072, G06F 12/109, G06F 9/54

(54) **SYSTEMS, METHODS, AND APPARATUS FOR REMOTE MEMORY ACCESS BY NODES**
SYSTEME, VERFAHREN UND VORRICHTUNG FÜR FERNSPEICHERZUGRIFF DURCH KNOTEN
SYSTÈMES, PROCÉDÉS ET APPAREIL POUR UN ACCÈS À UNE MÉMOIRE À DISTANCE PAR DES N UDS

(30) Priority: 14.03.2023 US 202363452078 P; 15.03.2023 US 202363452431 P; 14.09.2023 US 202318368556
(43) Date of publication of application: 18.09.2024
(73) Proprietor: Samsung Electronics Co., Ltd., Suwon-si, Gyeonggi-do 16677 (KR)
(72) Inventor: RIESEN, Rolf, San Jose, CA, 95134 (US); TAUFERNER, Andrew, San Jose, CA, 95134 (US); LOMBARD, David, San Jose, CA, 95134 (US); JOSEPH, Douglas, San Jose, CA, 95134 (US); DAYAL, Jai, San Jose, CA, 95134 (US); LOO, James, San Jose, CA, 95134 (US); WOLF, Matthew, San Jose, CA, 95134 (US); WISNIEWSKI, Robert, San Jose, CA, 95134 (US)
(74) Representative: Kuhnen & Wacker Patent- und Rechtsanwaltsbüro PartG mbB

(56) References cited:
- WO-A2-2004/091136
- WO-A2-99/12103
- US-A1- 2005 273 571

## Description

### TECHNICAL FIELD

The subject matter disclosed herein relates to multi-node computing systems. More particularly, the subject matter disclosed herein relates to a multi-node computing system in which nodes of the system access global shared memory using load/store commands.

### BACKGROUND

Some computing systems, such as large-scale computing systems, multi-node computing systems, supercomputers, and/or the like, may run a different operating system (OS) instance at each of one or more nodes of the computing system. Each respective OS may manage resources of a node including, for example, the physical memory resource installed on the node. Some embodiments may implement hardware that may allow one or more nodes to use memory-access instructions, such as load and store instructions, and/or the like, to access memory on one or more other nodes.

In some embodiments, one or more user-space applications may use virtual addresses to access memory. Virtual addresses may involve translating virtual addresses to physical addresses, thereby enabling hardware to store and/or retrieve data from specific memory locations. A translation may be performed, for example, by using one or more page tables. In some implementations, however, a page table managed by an operating system may not be configured to use memory located on a remote node.

In some embodiments of these large computing systems, an OS may manage resources for a node, and a remote access by another OS (or user process running on another OS) may involve one or more operations to coordinate the remote access. For example, one or more policies may be implemented to determine which OS (local or remote) may allocate and/or free memory, how other OSs may gain access, how error conditions are handled, how access may be removed by either the owner of the physical memory and/or one of the remote accessors, and/or the like.

WO 99/12103 A2 discloses a scalable shared memory multiprocessor system.

US 2005/273571 A1 discloses a distributed virtual multiprocessor.

WO 2004/091136 A2 discloses a multi-node system in which a global address generated by a processing subsystem includes global to local translation information.

### SUMMARY

The invention is set out in the appended set of claims. An example embodiment provides a computing node in a multi-node computing system in which the computing node may include a local memory, at least one processor and an access library. The at least one processor may be configured to run an operating system. The operating system may be configured to run an application in a virtual address space in which the application may be part of a distributed job running on multiple computing nodes of the multi-node computing system. The application may include a process that generates a first memory access request comprising a first virtual address. The access library may include a data structure on the computing node and the access library may be configured to be responsive to the first memory access request by converting the first virtual address into a first physical address, accessing the local memory based on the first physical address including a first indication that the first memory access request is for the local memory, and accessing a global access tuple table based on the first physical address including a second indication that the first memory access request is for memory located on a second computing node of the multi-node computing system that is remotely located from the computing node. In one embodiment, the first physical address may include a multi-bit address, and the first indication whether the first memory access request is for the local memory and the second indication whether the first memory access request is for memory located on the second computing node may include a state of one or more bits of the first physical address. In another embodiment, the local memory may include a first memory space allocated to be globally shared memory that accessible by at least the second computing node of the multi-node computing system that is remotely located from the computing node, and the processor may be further configured to run a distributed agent process configured to communicate availability of at least part of the first memory space to at least the second computing node. In still another embodiment, the access library may be responsive to a request received by the computing node to run the application by allocating the first memory space to be globally shared memory that accessible by at least one other computing node of the multi-node computing system. In yet another embodiment, the operating system may include a kernel configured to create the global access tuple table and insert entries into the global access tuple table. In one embodiment, the distributed agent process may be configured to provide global access tuple table entry information to the kernel related to globally shared memory. In another embodiment, the access library may be further configured to receive a node identification for the second computing node in response to accessing the global access tuple table. In still another embodiment, the computing node may be configured to receive a second memory access request from another computing node of the multi-node computing system in which the second memory access request may include a global virtual address, and the access library may be further configured to be responsive to the second memory access request by converting the second memory access request into a second physical address, and accessing the local memory based on the second physical address.

An example embodiment provides a multi-node computing system that may include multiple computing nodes communicatively interconnected through a communication network in which a first computing node may include a local memory, at least one processor, and an access library. The at least one processor may be configured to run an operating system in which the operating system may be configured to run an application in a virtual address space, and the application may be part of a distributed job running on the multiple computing nodes of the multi-node computing system. The application may include a process that generates a first memory access request comprising a first virtual address. The access library may include a data structure on the first computing node, and the access library may be configured to be responsive to the first memory access request by converting the first virtual address into a first physical address, accessing the local memory based on the first physical address including a first indication that the first memory access request is for the local memory, and accessing a global access tuple table based on the first physical address including a second indication that the first memory access request is for memory located on a second computing node of the multi-node computing system that is remotely located from the first computing node. In one embodiment, the first physical address may include a multi-bit address, and the first indication whether the first memory access request is for the local memory and the second indication whether the first memory access request is for memory located on the second computing node may include a state of one or more bits of the first physical address. In another embodiment, the local memory may include a first memory space allocated to be globally shared memory that accessible by at least the second computing node of the multi-node computing system that is remotely located from the first computing node, and the processor may be further configured to run a distributed agent process configured to communicate availability of at least part of the first memory space to at least the second computing node. In still another embodiment, the access library may be responsive to a request received by the first computing node to run the application by allocating the first memory space to be globally shared memory that accessible by at least one other computing node of the multi-node computing system. In yet another embodiment, the operating system may include a kernel configured to create the global access tuple table and insert entries into the global access tuple table. In one embodiment, the distributed agent process may be configured to provide global access tuple table entry information to the kernel related to globally shared memory. In another embodiment, the access library may be further configured to receive a node identification for the second computing node in response to accessing the global access tuple table. In still another embodiment, the first computing node may be configured to receive a second memory access request from another computing node of the multi-node computing system in which the second memory access request may include a global virtual address, and the access library may further configured to be responsive to the second memory access request by converting the second memory access request into a second physical address, and accessing the local memory based on the second physical address.

An example embodiment provides a method to access globally shared memory in a multi-node computing system in which the method may include: running an application in a virtual address space by a processor of a first computing node that is part of a multi-node computing system in which the application may be part of a distributed job running on multiple nodes of the multi-node computing system; generating, by a process of the application, a first memory access request comprising a first virtual address; converting the first virtual address into a first physical address by an access library in which the access library may include a data structure on the first computing node; accessing a local memory on the first computing node based on the first physical address including a first indication that the first memory access request is for the local memory; and accessing a global access tuple table on the first computing node based on the first physical address including a second indication that the first memory access request is for memory located on a second computing node of the multi-node computing system that is remotely located from the first computing node. In one embodiment, the first physical address may include a multi-bit address, and the first indication whether the first memory access request is for the local memory and the second indication whether the first memory access request is for memory located on the second computing node may include a state of one or more bits of the first physical address. In still another embodiment, the local memory may include a first memory space allocated to be globally shared memory that accessible by at least the second computing node of the multi-node computing system that is remotely located from the first computing node, and in which method may further include: running a distributed agent process by the processor that is configured to communicate availability of at least part of the first memory space to at least the second computing node; allocating, by the access library, the first memory space to be globally shared memory that accessible by at least one other computing node of the multi-node computing system in response to a request received by the first computing node to run the application; creating the global access tuple table by a kernel of an operating system of the first computing node; and inserting entries into the global access tuple table by the kernel based on globally shared memory information from the distributed agent process. In yet another embodiment, the method may further include: receiving a second memory access request from another computing node of the multi-node computing system in which the second memory access request may include a global virtual address; converting the second memory access request into a second physical address by the access library; and accessing the local memory by the access library based on the second physical address.

### BRIEF DESCRIPTION OF THE DRAWING

In the following section, the aspects of the subject matter disclosed herein will be described with reference to exemplary embodiments illustrated in the figures, in which:
FIG. 1 depicts an example embodiment of an architecture of a multi-node computing system according to the subject matter disclosed herein;
FIG. 2 depicts additional details of the example embodiment of the architecture of the multi-node computing system according to the subject matter disclosed herein;
FIG. 3 is a flowchart for an example method of setting up a job on an example multi-node computing system according to the subject matter disclosed herein; and
FIG. 4 depicts an electronic device that may be configured to be a node in a multi-node computing system according to the subject matter disclosed herein.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The subject matter disclosed herein provides a multi-node computing system having globally shared memory that may be accessed by nodes of the system using read/write commands. The individual nodes of the multi-node computing system, which may each be running a different operating system, each include a management structure having one or more page tables that enable access to the globally shared memory. The management structure may be provided by one or more modules in which each module may include any combination of software, firmware and/or hardware configured to provide the functionality of the subject matter disclosed herein.

In one embodiment, a virtual address within a local operating system that is part of a memory access request may be translated by a local page table into a physical address that may include global information (e.g., one or more bits) used to access the globally shared memory. If the address that is returned from a local page table is a local memory address, then the global information may be ignored and the remaining physical address may be processed by a local memory controller to access local memory. If, based on the global information, the returned address is for memory in the global shared memory, then the returned address is a global virtual address. The global virtual address may be translated by a global access tuple table to obtain remote node identification (node ID) information for the global virtual address. The access request (e.g., load/store) is sent to the node corresponding to the node ID information, and the access request is processed as a local access request at the remote node.

In one embodiment, the management structure includes a distributed agent arrangement that allows multiple nodes, each running a different operating system, to communicate, to enforce a remote access policy, and/or to set up local page tables that translate local virtual addresses into remote global physical addresses.

In one embodiment, the global shared memory being shared among multiple nodes may be registered with the distributed agents associated with each respective node. The agents may be configured to track which nodes have pointers installed in page tables that allow remote access. When access is removed and/or when a process ceases to exist, the distributed agents may update the state of sharing and/or direct operating system kernels remove the page table entries, e.g., before memory is freed.

In one embodiment, accessing physical memory that is under the management of another operating system may involve one or more considerations relating to security and/or complexity of enabling user space programs to make use of features. The subject matter disclosed herein provides distributed agents that enable a protocol to enforce access privileges. In one embodiment, a protocol may provide that an OS is configured as a trusted entity because the OS may be a gatekeeper to hardware and/or may control user-level program access to resources. In another embodiment, a provider, such as a manufacturer, vendor, and/or the like, of a distributed memory-sharing system may provide one or more protocol-enhanced OS kernels. In one embodiment, a system administrator (e.g., at a user site) may confirm that approved kernels may be loaded onto one or more nodes of a system (e.g., from a provider). Additionally, or alternatively, a protocol may be subjected to a verify-and-validate (V&V) process that provides, for example, security and/or safety against unintended alterations of critical data. In one embodiment, and depending on the implementation details, one or more features herein may provide a secure technique for allowing remote memory accesses.

One example embodiment disclosed herein may make one or more features described herein available to user-space applications, which may be accomplished by enhancing one or more page tables used by hardware, applications, and/or the like. For example, extra information (e.g., extra bits in an address field) may be used to identify one or more remotely located nodes. In some embodiments, a protocol used to establish remote access may be used to install remote memory page table entries and/or assign valid, local virtual addresses that a program may use.

The subject matter disclosed herein provides access to globally shared memory using load/store instructions that utilize process page tables and Global Access Tuple (GAT) tables to facilitate translation of global virtual addresses (GVADDR) to addresses that may be used by hardware to access remote memory. In one embodiment, the subject matter disclosed herein may include software and/or firmware to set up hardware, coordinate access to globally shared memory, and enforce the necessary security protection.

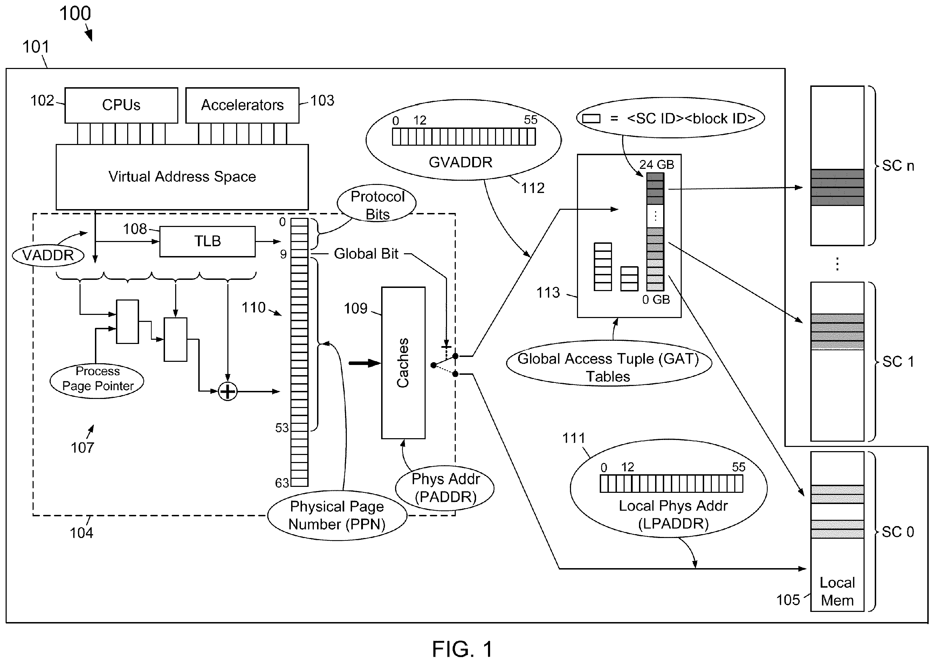

FIG. 1 depicts an example embodiment of an architecture of a multi-node computing system 100 according to the subject matter disclosed herein. The multi-node computing system 100 may include any number of nodes 101 that may be interconnected by, for example, a high-performance network. In one embodiment, a node 101 may be configured as a personal computer (PC), however, other computing devices having a computing power that is different from the computing power of a PC are also possible. That is, the computing power of a node is not limited to the computing power of a PC.

Some or all of the nodes 101 of the system 100 may be configured or allocated to compute a particular (distributed) job or task. Each job may involve multiple processes in which one or more of the processes may be allocated to run on a given node 101. Each process of the job may access (shared) local memory located on the node of the process and may access remote shared memory space located on a different node 101 that has also been configured or allocated to work on the job.

Each node 101 of the multi-node computing system 100 may include one or more central processing units (CPUs) 102, one or more accelerators 103, a memory management unit (MMU) 104, and a local memory 105. The computing environment of the node 101 may be configured so that the CPUs 102, the accelerators and the MMU share or are part of a virtual address space 106. In one embodiment, the virtual address space 106 may comply with a page-based Sv48 Virtual-Memory System. In another embodiment, the virtual address space 106 may comply with a page-based Sv57 Virtual-Memory System. Other virtual address spaces are possible. In one embodiment, a page in a virtual address space may be of a predetermined size.

The MMU 104 may be configured so that the CPUs 102 and the accelerators 103 may access the local memory 105 and remote shared memory through the MMU 104. In one embodiment, the MMU 104 may be configured to include one or more hardware components and/or memory structures that provide a virtual-to-physical translation structure 107, a translation lookaside buffer (TLB) 108, and/or one or more caches 109. Alternatively, in one embodiment the TLB 108 and the caches 109 may be data structures configured in the local memory 105 and/or in other local memory (not shown) that is part of the node 101. The TLB 108 and/or one or more of the caches 109 may be configured to cache recently used page table entries. Because some of the virtual-to-physical translation structure and functionality may be located external to the MMU 104, the MMU 104 is denoted by a dashed line in FIG. 1.

The virtual-to-physical translation structure 107 and the TLB 108 operate to convert, or translate, a virtual address (VADDR) generated by a process running on the node 101 into a physical address (PADDR) by using at least one page table that may be associated with the process. That is, each respective process running on the node 101 may have at least one page table associated with the process. Local virtual addresses may be implemented per process. Alternatively, local virtual addresses may be implemented per node. In one embodiment, the virtual-to-physical translation structure 107 may be configured to use a process page pointer associated with a page table to covert a virtual address in a virtual space of a process into a physical address for the process.

The physical addresses 110 that are converted, or retrieved, by the translation structure 107 and TLB 108 may be at least 48-bits in length. In one embodiment, a physical address 110 may include a protocol information field, a global information field, and physical page number (PPN) information field. Each field may include as at least as many bits that are used to convey the information of the particular field. For example, in one embodiment the global information field may be a single bit that indicates whether a physical address corresponds to a local memory address or a remote memory address. In one embodiment, the global information field may be located at, for example, bit 9 of a physical address. It should be noted that a physical address 110 depicted in FIG. 1 is not drawn to scale, and may contain a different number of bits than 63 bits.

During translation of the virtual address, the global information field may be examined, either using a hardware process or a software process. If the global bit of a virtual address indicates that the corresponding physical address is not a global address, that is, the corresponding physical address is a local address, then the virtual address translates into a local physical address (LPADDR) 111 that is located within the local memory 105, and the access request completes like a normal local-access request. If the global bit of a virtual address indicates that the corresponding physical address is in remote shared memory, then a virtual global address (GVADDR) 112 corresponding to the initial virtual address is directed to Global Access Tuple (GAT) tables 113. The GAT tables 113 translate the GVADDR 112 into a global physical address (GPADDR) located in global shared memory that is associated with the job. It should be noted that the LPADDR 111 and the GBADDR 112 depicted in FIG. 1 are not drawn to scale, and the number of bits each contain may be different from 55 bits.

In one embodiment, each of one or more processes of a job running in the node 101 has at least one corresponding GAT table 113. In another embodiment, a GAT table for multiple processes of a job may be used in conjunction with a process page pointer may be used. As an example, a GAT table 113 is indicated to cover 24 GB of shared remote memory. In one embodiment, each entry of a GAT table (depicted as a block in FIG. 1) includes information relating to a remote node identification (SC ID) and a block identification (block ID). Each respective SC ID indicates a particular remote node, and the block ID indicates a block of memory within the remote node. As depicted in the example of FIG. 1, node SC 0 is the local node 101, and remote nodes SC 1 through SC n are configured to share memory with the process associated with the GAT table covering 24 GB.

It should be understood that a configuration for only a single job has been depicted in FIG. 1, and multiple jobs may be concurrently allocated to different nodes of the multi-node computing system 100. For example, the node SC 0 may configured to be running one or more processes for each of one or more different jobs, in which case the configuration depicted in FIG. 1 for a single job would be generally replicated for each respective job allocated to the node SC 0 and in which each respective job would generally have different allocated remote nodes.

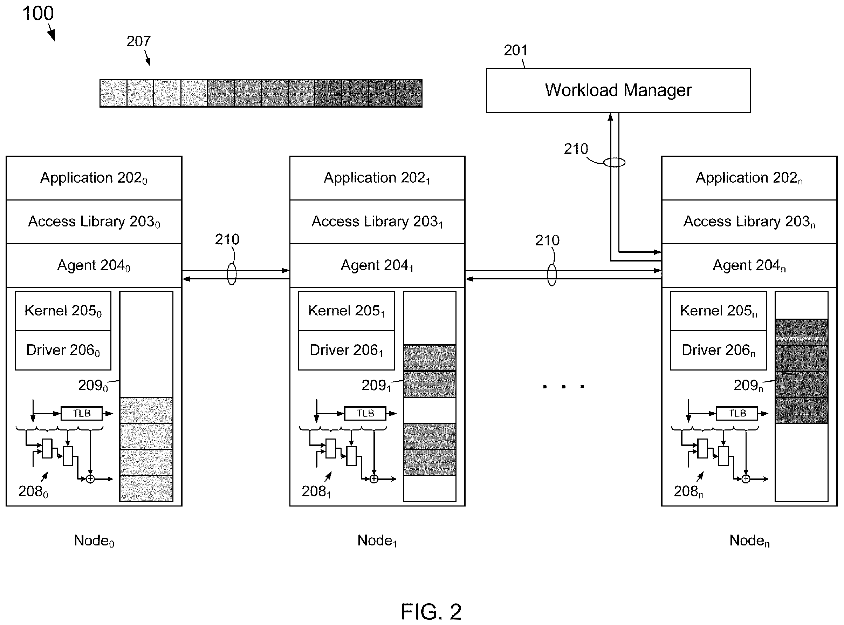

FIG. 2 depicts additional details of the example embodiment of the architecture of the multi-node computing system 100 according to the subject matter disclosed herein. More specifically, FIG. 2 depicts a workload manager 201 and three example nodes (Node₀, Node₁ and Nodeₙ) that, by way of example, have been allocated by the workload manager 201 to run a given job (or application) 202. Each node of the multi-node computing system 100 runs its own operating system. For each job allocated, or assigned, to a node, the node may be configured to include an access library 203, a distributed agent 204, and an operating system kernel 205/driver 206. When multiple jobs are allocated, or assigned, to a given node, the node may be configured to include an access library 203, a distributed agent 204, and an operating system kernel 205/driver 206 that is associated with the job. The access library 203, the distributed agent 204, and the kernel 205/driver 206 associated with a job may be implemented as modules that provide the three main aspects that manage a global shared memory 207 associated with a job so that the job may be run on the multi-node computing system 100. Each node also includes a virtual-to-physical translation structure 208 and a local memory 209, similar to physical translation structure 107 and local memory 105 as described in connection with FIG. 1.

The access library 203 includes information so that the application processes and runtime systems running on a node may request and use the global shared memory 207 for a job. The access library 203 on a node designates a pool of local memory 208 that will be reserved for the global shared memory 207 based on requests for memory received from each locally running application process. The access library 203 also allocates memory to a local process from the global shared memory, which may be local or remote. In one embodiment, the access library 203 may include a functionality and/or a structure of the virtual-to-physical translation structure 208. The access library 203 may include information relating to which node of the system stores the physical address of a virtual address, and operates to query and/or determines whether a physical address is local or remote. That is, the access library may be configured to manage GAT tables associated with a job in conjunction with the kernel 205/driver 206. When a physical address is determined to be on a remote node, the access library 203 issues a request to the local agent 204. Additionally, the access library 203 may manage the reserved memory pool size 207 including growth and shrinkage functionality, memory distribution and user access functionality, and the freeing of the reserved memory pool when the job completes.

The distributed agent 204 associated with a job runs on each participating node, and coordinates with the workload manager 202. The distributed agent 204 also coordinates regions of the global shared memory 207 with the other nodes associated with the job, and may be involved with allocating local memory 209 for a global shared memory region, and may free memory when the memory is no longer needed. The regions of global shared memory 207 are not necessarily contiguous regions of local memory. Additionally, the distributed agent 204 provides services to the job application 202 via the access library 203, and works with the local kernel 205 to set up page tables and GAT tables for the processes running on the node by providing physical address information for the global shared memory 207. The distributed agent 204 may enforce protection policies as the different processes of a job operate. In one embodiment, the distributed agent 204 may be configured to operate as one or more user-space daemons having special privileges that may be used.

The OS kernel 205/driver 206 provide mechanisms to locally manage local and remote memory resources. The kernel 205/driver 206 may create one or more GAT tables and insert table entries for processes that participate in globally shared memory pools. In one embodiment, the kernel 205/driver 206 may insert valid remote physical addresses into the process page tables, while also removing invalid addresses, flushing TLBs, updating head pointers, and managing permission changes. Additionally, the kernel 205/driver 206 may manage the GAT tables during context switching. The kernel 205/driver 206 may also be involved with allocating and freeing aligned local memory for contribution to a global shared memory pool 207.

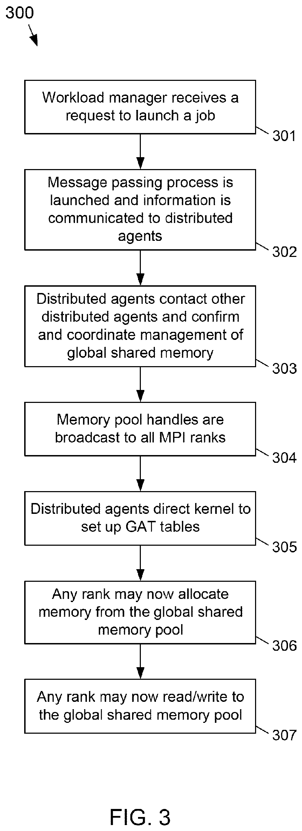

FIG. 3 is a flowchart for an example method 300 of setting up a job on an example multi-node computing system according to the subject matter disclosed herein. The example multi-node computing system may be configured similar to the multi-node computing system 100 depicted in FIGS. 1 and 2.

At 301, the workload manager 201 receives a request to launch a job. The job request may include information about the job and the processes involved with the job. The workload manager 201 determines and allocates the resources for the job. In one embodiment, the workload manager 201 contacts each node selected to be allocated over a high-performance network 209, and communicates information relating to the job, the processes involved with the job, and the resources to complete the job. Alternatively, the workload manager 201 may communicate information relating to the job to a selected node that has been allocated to the job, and that node then manages setup communication to the other nodes allocated to the job.

Details of the job may, for example, include that the job is to be launched on eight nodes, and a message passing interface (MPI) will be used having two ranks per node for a total of 16 MPI ranks and an allocation of 2 GB of global memory per rank for a total of 32 GB of global shared memory. The workload manager 201 identifies eight nodes that will be allocated to the job, and the MPI rank 0 requests 32 GB of shared memory. It should be understood that other parallel-computing message-passing techniques may be used.

At 302, the message-passing process is launched, and information relating to the job request is communicated to a distributed agent 204 on each of the eight nodes allocated to the job. The information communicated to each distributed agent 204 may include information relating to each of the seven other nodes allocated to the job.

At 303, each of the distributed agents 204 on the nodes allocated to the job contact the distributed agents 204 on the other seven allocated nodes and confirm that sufficient memory is available on each node for the job. Additionally, each distributed agent 204 directs the kernel 205 allocate the available memory to the job, and communicates block location information to each of the other distributed agents 204 associated with the job. Each distributed agent 204 returns a pool handle associated with each respective allocated memory.

At 304, the MPI rank 0 broadcasts the pool handles to all MPI ranks.

At 305, each MPI rank (including rank 0) reserves the pool. The reserve request goes through a distributed agent 204 to the access library 203, and after confirming that the process has an access right, the agent 204 directs the kernel 205 to set up a GAT table and a page table entry for each process rank.

At 306, any rank may now allocate memory from the memory pool. A user library may do so without kernel or agent involvement. A virtual address point is valid within any process that has joined the pool reservation.

At 307, any rank may read/write into the global shared memory using load/store instructions.

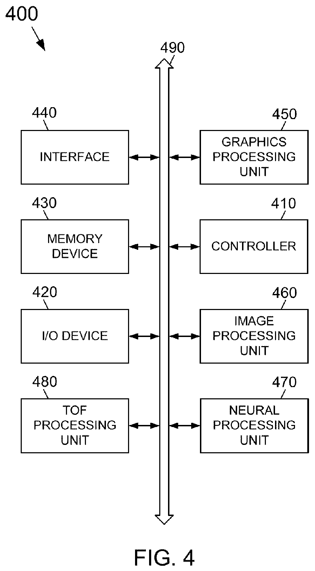

FIG. 4 depicts an electronic device 400 that may be configured to be a node in a multi-node computing system according to the subject matter disclosed herein. Electronic device 400 and the various system components of electronic device 400 may be formed from one or modules. The electronic device 400 may include a controller (or CPU) 410, an input/output device 420 such as, but not limited to, a keypad, a keyboard, a display, a touch-screen display, a 2D image sensor, a 3D image sensor, a memory 430, an interface 440, a GPU 450, an imaging-processing unit 460, a neural processing unit 470, a Time-of-Flight (TOF) processing unit 480 that are coupled to each other through a bus 490. In one embodiment, the electronic device 400 may be configured to include an access library, a distributed agent, and a kernel/driver according to the subject matter disclosed herein. In one embodiment, the 2D image sensor and/or the 3D image sensor may be part of the imaging processing unit 460. In another embodiment, the 3D image sensor may be part of the TOF processing unit 480. The controller 410 may include, for example, at least one microprocessor, at least one digital signal processor, at least one microcontroller, or the like. The memory 430 may be configured to store command codes that are to be used by the controller 410 and/or to store a user data.

The interface 440 may be configured to include a wireless interface that is configured to transmit data to or receive data from, for example, a wireless communication network using a Radio Frequency (RF) signal. The wireless interface 440 may include, for example, an antenna. The electronic system 400 also may be used in a communication interface protocol of a communication system, such as, but not limited to, Code Division Multiple Access (CDMA), Global System for Mobile Communications (GSM), North American Digital Communications (NADC), Extended Time Division Multiple Access (E-TDMA), Wideband CDMA (WCDMA), CDMA2000, Wi-Fi, Municipal Wi-Fi (Muni Wi-Fi), Bluetooth, Digital Enhanced Cordless Telecommunications (DECT), Wireless Universal Serial Bus (Wireless USB), Fast low-latency access with seamless handoff Orthogonal Frequency Division Multiplexing (Flash-OFDM), IEEE 802.20, General Packet Radio Service (GPRS), iBurst, Wireless Broadband (WiBro), WiMAX, WiMAX-Advanced, Universal Mobile Telecommunication Service - Time Division Duplex (UMTS-TDD), High Speed Packet Access (HSPA), Evolution Data Optimized (EVDO), Long Term Evolution - Advanced (LTE-Advanced), Multichannel Multipoint Distribution Service (MMDS), Fifth-Generation Wireless (5G), Sixth-Generation Wireless (6G), and so forth.

Embodiments of the subject matter and the operations described in this specification may be implemented in digital electronic circuitry, or in computer software, firmware, or hardware, including the structures disclosed in this specification, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A computing node (101) for a multi-node computing system (100), the computing node (101) comprising:
a local memory (105);
at least one processor (102) configured to run an operating system, the operating system being configured to run an application (202) in a virtual address space (106), and the application being part of a distributed job running on multiple computing nodes of the multi-node computing system (100), and the application (202) comprising a process that generates a first memory access request comprising a first virtual address (VADDR); and
an access library (203) comprising a data structure (107) on the computing node (101), the access library (203) configured to be responsive to the first memory access request by:
converting the first virtual address (VADDR) into a first physical address (PADDR);
accessing the local memory (105) based on the first physical address (PADDR) including a first indication that the first memory access request is for the local memory (105); and
accessing a global access tuple (GAT) table (113) based on the first physical address (PADDR) including a second indication that the first memory access request is for memory located on a second computing node of the multi-node computing system (100) that is remotely located from the computing node (101),
wherein the local memory (105) includes a first memory space allocated to be globally shared memory that is accessible by at least the second computing node of the multi-node computing system (100) that is remotely located from the computing node (101),
wherein the processor (102) is further configured to run a distributed agent process configured to communicate availability of at least part of the first memory space to at least the second computing node,
**characterised in that**
the access library (203) is further configured, responsive to a request received by the computing node (101) to run the application (202), to allocate the first memory space to be globally shared memory that is accessible by at least one other computing node (101) of the multi-node computing system (100), and
**in that**
each of the global access tuple (GAT) entries identifies a respective computing node of the multiple computing nodes, said multiple computing nodes including the second computing node, and a block of memory within said respective computing node.

2. The computing node (101) of claim 1, wherein the first physical address (PADDR) comprises a multi-bit address, and the first indication whether the first memory access request is for the local memory (105) and the second indication whether the first memory access request is for memory located on the second computing node comprises a state of one or more bits of the first physical address (PADDR).

3. The computing node (101) of claim 1 or 2, wherein the operating system comprises a kernel (205) configured to create the global access tuple (GAT) table (113) and insert entries into the global access tuple (GAT) table (113).

4. The computing node (101) of claim 3, wherein the distributed agent process is configured to provide global access tuple (GAT) table (113) entry information to the kernel (205) related to globally shared memory.

5. The computing node (101) of any one of claims 1 to 4, wherein the access library (203) is further configured to receive a node identification for the second computing node in response to accessing the global access tuple (GAT) table (113).

6. The computing node (101) of any one of claims 1 to 5, wherein the computing node (101) is configured to receive a second memory access request from another computing node (101) of the multi-node computing system (100), the second memory access request comprising a global virtual address, and
wherein the access library (203) is further configured to be responsive to the second memory access request by:
converting the second memory access request into a second physical address; and
accessing the local memory (105) based on the second physical address.

7. A multi-node computing system (100), comprising:
multiple computing nodes communicatively interconnected through a communication network, the multiple computing nodes comprising at least a first computing node according to any one of claims 1 to 6 and the second computing node mentioned in claim 1.

## Patentansprüche

1. Rechenknoten (101) für ein Mehrknoten-Rechensystem (100), wobei der Rechenknoten (101) aufweist:
einen lokalen Speicher (105);
zumindest einen Prozessor (102), der zum Ausführen eines Betriebssystems konfiguriert ist, wobei das Betriebssystem zum Ausführen einer Anwendung (202) in einem virtuellen Adressraum (106) konfiguriert ist und die Anwendung Teil eines verteilten Auftrags ist, der auf mehreren Rechenknoten des Mehrknoten-Rechensystems (100) ausgeführt wird, wobei die Anwendung (202) einen Prozess beinhaltet, der eine erste Speicherzugriffsanforderung erzeugt, die eine erste virtuelle Adresse (VADDR) aufweist; und
eine Zugriffsbibliothek (203), die eine Datenstruktur (107) auf dem Rechenknoten (101) aufweist, wobei die Zugriffsbibliothek (203) so konfiguriert ist, dass sie auf die erste Speicherzugriffsanforderung reagiert, indem sie:
die erste virtuelle Adresse (VADDR) in eine erste physikalische Adresse (PADDR) umwandelt;
auf den lokalen Speicher (105) basierend auf der ersten physikalischen Adresse (PADDR) zugreift, welche eine ersten Angabe beinhaltet, dass die erste Speicherzugriffsanforderung für den lokalen Speicher (105) bestimmt ist; und
auf eine globale Zugriffstupel (GAT)-Tabelle (113) basierend auf der ersten physikalischen Adresse (PADDR) zugreift, welche eine zweite Angabe beinhaltet, dass die erste Speicherzugriffsanforderung für einen Speicher bestimmt ist, der sich auf einem zweiten Rechenknoten des Mehrknoten-Rechensystems (100) befindet, welcher entfernt von dem Rechenknoten (101) angeordnet ist,
wobei der lokale Speicher (105) einen ersten Speicherplatz beinhaltet, der als global gemeinsam genutzter Speicher zugewiesen ist, auf den zumindest der zweite Rechenknoten des Mehrknoten-Rechensystems (100), der sich entfernt von dem Rechenknoten (101) befindet, zugreifen kann,
wobei der Prozessor (102) ferner so konfiguriert ist, dass er einen verteilten Agentenprozess ausführt, der so konfiguriert ist, dass er die Verfügbarkeit zumindest eines Teils des ersten Speicherplatzes zumindest dem zweiten Rechenknoten mitteilt,
**dadurch gekennzeichnet, dass** die Zugriffsbibliothek (203) ferner so konfiguriert ist, dass sie auf eine von dem Rechenknoten (101) empfangene Anforderung zum Ausführen der Anwendung (202) dadurch reagiert, dass sie den ersten Speicherplatz als global gemeinsam genutzten Speicher zuweist, auf den zumindest ein anderer Rechenknoten (101) des Mehrknoten-Rechensystems (100) zugreifen kann, und
dadurch, dass jeder der globalen Zugriffstupel (GAT)-Einträge einen jeweiligen Rechenknoten der mehreren Rechenknoten, wobei die mehreren Rechenknoten den zweiten Rechenknoten beinhalten, sowie einen Speicherblock innerhalb des jeweiligen Rechenknotens identifiziert.

2. Rechenknoten (101) nach Anspruch 1, wobei die erste physikalische Adresse (PADDR) eine Mehrbitadresse beinhaltet und die erste Angabe, ob die erste Speicherzugriffsanforderung für den lokalen Speicher (105) bestimmt ist, und die zweite Angabe, ob die erste Speicherzugriffsanforderung für einen Speicher bestimmt ist, der sich auf dem zweiten Rechenknoten befindet, einen Zustand eines oder mehrerer Bits der ersten physikalischen Adresse (PADDR) aufweisen.

3. Rechenknoten (101) nach Anspruch 1 oder 2, wobei das Betriebssystem einen Kernel (205) beinhaltet, der so konfiguriert ist, dass er die globale Zugriffstupel (GAT)-Tabelle (113) erzeugt und Einträge in die globale Zugriffstupel (GAT)-Tabelle (113) einfügt.

4. Rechenknoten (101) nach Anspruch 3, wobei der verteilte Agenten-Prozess so konfiguriert ist, dass er dem Kernel (205) Informationen zu Einträgen in der globalen Zugriffstupel (GAT)-Tabelle (113) bereitstellt, die sich auf einen global gemeinsam genutzten Speicher beziehen.

5. Rechenknoten (101) nach einem der Ansprüche 1 bis 4, wobei die Zugriffsbibliothek (203) ferner so konfiguriert ist, dass sie eine Knotenidentifikation für den zweiten Rechenknoten als Reaktion auf den Zugriff auf die globale Zugriffstupel (GAT)-Tabelle (113) empfängt.

6. Rechenknoten (101) nach einem der Ansprüche 1 bis 5, wobei der Rechenknoten (101) so konfiguriert ist, dass er eine zweite Speicherzugriffsanforderung von einem weiteren Rechenknoten (101) des Mehrknoten-Rechensystems (100) empfängt, wobei die zweite Speicherzugriffsanforderung eine globale virtuelle Adresse aufweist, und
wobei die Zugriffsbibliothek (203) ferner so konfiguriert ist, dass sie auf die zweite Speicherzugriffsanforderung reagiert, indem sie:
die zweite Speicherzugriffsanforderung in eine zweite physikalische Adresse umwandelt; und
auf den lokalen Speicher (105) basierend auf der zweiten physikalischen Adresse zugreift.

7. Mehrknoten-Rechensystem (100), aufweisend:
mehrere Rechenknoten, die über ein Kommunikationsnetzwerk kommunikativ miteinander verbunden sind, wobei die mehreren Rechenknoten zumindest einen ersten Rechenknoten nach einem der Ansprüche 1 bis 6 und den in Anspruch 1 genannten zweiten Rechenknoten aufweisen.

## Revendications

1. Nœud de calcul (101) pour un système informatique multinœud (100), le nœud de calcul (101) comprenant :
une mémoire locale (105) ;
au moins un processeur (102) configuré pour exécuter un système d'exploitation, le système d'exploitation étant configuré pour exécuter une application (202) dans un espace d'adressage virtuel (106), l'application faisant partie d'un travail distribué exécuté sur une pluralité de nœuds de calcul du système informatique multinœud (100), et l'application (202) comprenant un processus qui génère une première requête d'accès mémoire comportant une première adresse virtuelle (VADDR) ; et
une bibliothèque d'accès (203) comprenant une structure de données (107) sur le nœud de calcul (101), la bibliothèque d'accès (203) étant configurée pour, en réponse à la première requête d'accès mémoire :
convertir la première adresse virtuelle (VADDR) en une première adresse physique (PADDR) ;
accéder à la mémoire locale (105) sur la base de la première adresse physique (PADDR), comprenant une première indication selon laquelle la première requête d'accès mémoire concerne la mémoire locale (105) ; et
accéder à une table de tuples d'accès global (GAT) (113) sur la base de la première adresse physique (PADDR), comprenant une deuxième indication selon laquelle la première requête d'accès mémoire concerne une mémoire située sur un deuxième nœud de calcul du système informatique multinœud (100), éloigné du nœud de calcul (101),
dans lequel la mémoire locale (105) comprend un premier espace mémoire attribué en tant que mémoire partagée globale, accessible par au moins le deuxième nœud de calcul du système informatique multinœud (100), éloigné du nœud de calcul (101),
dans lequel le processeur (102) est en outre configuré pour exécuter un processus d'agent distribué configuré pour communiquer la disponibilité d'au moins une partie du premier espace mémoire à au moins le deuxième nœud de calcul,
**caractérisé en ce que** la bibliothèque d'accès (203) est en outre configurée, en réponse à une requête reçue par le nœud de calcul (101) pour exécuter l'application (202), pour attribuer le premier espace mémoire en tant que mémoire partagée globale, accessible par au moins un autre nœud de calcul (101) du système informatique multinœud (100), et
**en ce que** chacune des entrées de la table de tuples d'accès global (GAT) identifie un nœud de calcul respectif de la pluralité de nœuds de calcul, ladite pluralité comprenant ledit deuxième nœud de calcul, ainsi qu'un bloc de mémoire au sein dudit nœud de calcul respectif.

2. Nœud de calcul (101) selon la revendication 1, dans lequel la première adresse physique (PADDR) comprend une adresse à plusieurs bits, et dans lequel la première indication selon laquelle la première requête d'accès mémoire concerne la mémoire locale (105) et la deuxième indication selon laquelle la première requête d'accès mémoire concerne une mémoire située sur le deuxième nœud de calcul comprennent un état d'un ou de plusieurs bits de la première adresse physique (PADDR).

3. Nœud de calcul (101) selon la revendication 1 ou 2, dans lequel le système d'exploitation comprend un noyau (205) configuré pour créer la table de tuples d'accès global (GAT) (113) et pour insérer des entrées dans la table de tuples d'accès global (GAT) (113).

4. Nœud de calcul (101) selon la revendication 3, dans lequel le processus d'agent distribué est configuré pour fournir au noyau (205) des informations d'entrées de la table de tuples d'accès global (GAT) (113) relatives à la mémoire partagée globale.

5. Nœud de calcul (101) selon l'une quelconque des revendications 1 à 4, dans lequel la bibliothèque d'accès (203) est en outre configurée pour recevoir un identifiant de nœud pour le deuxième nœud de calcul, en réponse à l'accès à la table de tuples d'accès global (GAT) (113).

6. Nœud de calcul (101) selon l'une quelconque des revendications 1 à 5, dans lequel le nœud de calcul (101) est configuré pour recevoir une deuxième requête d'accès mémoire provenant d'un autre nœud de calcul (101) du système informatique multinœud (100), la deuxième requête d'accès mémoire comprenant une adresse virtuelle globale, et
dans lequel la bibliothèque d'accès (203) est en outre configurée pour, en réponse à la deuxième requête d'accès mémoire :
convertir la deuxième requête d'accès mémoire en une deuxième adresse physique ; et
accéder à la mémoire locale (105) sur la base de la deuxième adresse physique.

7. Système informatique multinœud (100), comprenant :
une pluralité de nœuds de calcul interconnectés via un réseau de communication, la pluralité de nœuds de calcul comprenant au moins un premier nœud de calcul selon l'une quelconque des revendications 1 à 6 et le deuxième nœud de calcul mentionné dans la revendication 1.
